Europäisches Patentamt

European Patent Office

Office européen des brevets

(11) Publication number: 0 518 239 A1

# EUROPEAN PATENT APPLICATION

(21) Application number: 92109589.9

(22) Date of filing: 05.06.92

(51) Int. Cl.5: F02D 41/22, F02D 41/26, G01D 1/00

(30) Priority: 11.06.91 IT TO910444

(43) Date of publication of application:
16.12.92 Bulletin 92/51

(84) Designated Contracting States:
DE ES FR GB

(71) Applicant: WEBER S.r.l.
Corso Marconi, 20
I-10125 Torino(IT)

(72) Inventor: Serra, Gabriele
Via Orsani, 43
I-40068 S. Lazzaro di Savena(IT)
Inventor: Matteucci, Daniele
Via Pasteur, 3
I-40100 Bologna(IT)

(74) Representative: Jorio, Paolo et al
Studio Torta, Via Viotti, 9
I-10121 Torino(IT)

(54) A system for detecting pulse signals in a machine having a cyclic operation.

(57) The system (1) detects pulse signals in a machine (2) having a cyclic operation and comprises:

an electronic device (5) operable to control the members (3) of the machine (2) with electrical duty cycle signals;

first means (4) for decoding the angular position of the cyclic motion by detecting synchronising signals in the machine (2);

second means (6) operable to convert the duty cycle signals into analogue signals referred to a specific angular value of the cyclic motion; and

third means (9) operable to record the analogue signals in a system of Cartesian axes on a suitable support.

Fig.1

Rank Xerox (UK) Business Services

The present invention relates to the system for detecting pulse signals in a machine having a cyclic operation.

The object of the present invention is that of providing a system for detecting pulse signals in a machine having a cyclic operation, which permits the pulse signals, converted into analogue signals, to be plotted with reference to the cyclic motion.

Further objects and advantages of the present invention will become apparent during the course of the following description.

According to the present invention, there is provided a system for detecting pulse signals in a machine having a cyclic operation, characterised by the fact that it comprises:

an electronic device operable to control parts of the said machine by electrical duty cycle signals;

first decoder means for decoding the angular position of the cyclic motion by detecting synchronising signals in the said machine;

second means operable to convert the said duty cycle signals into analogue signals referred to a specific angular value of the cyclic motion; and

third means operable to record the said analogue signals in a Cartesian axes system on a suitable support.

For a better understanding of the present invention a preferred embodiment is now described purely by way of non-limitative example, with reference to the attached drawings, in which:

Figure 1 is a block diagram of a system formed according to the principles of the present invention; and

Figure 2 illustrates a plurality of plots of detected and converted electrical signals.

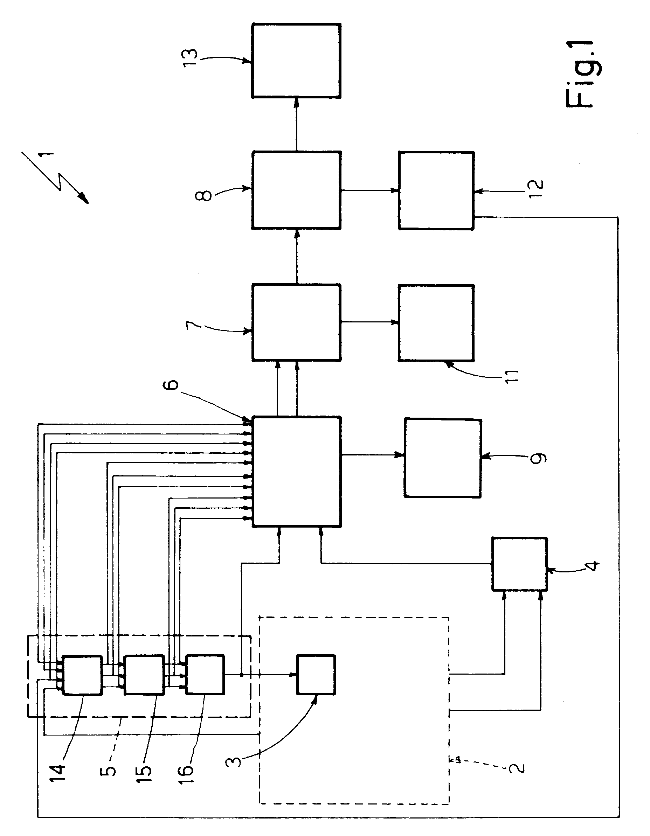

Figure 1 is a block diagram which represents a system 1 for detecting pulse signals in a machine 2 in which a cyclic motion is present. The machine 2 can be represented by an internal combustion engine of a motor vehicle or by an automatic machine in which there is a cyclic motion, for example of a principal shaft. The system 1 provides for the conversion of square wave signals which control the "duty cycle" of the members 3, (here for simplicity shown as a single unit) of the machine 2 into analogue signals referred to any geometric point in the cyclic motion in a system of Cartesian axes. In this way it is possible to derive an angular plot of the converted values referred to the cyclic motion.

A duty cycle signal is a signal having a plurality of square wave pulses between 0 and 1, one for each period T By "duty cycle", which is an expression typical in the art of controls for regulating members, is meant the transfer factor of the signal, or better still the coefficient of utilisation thereof. To better indicate the significance of the expression "duty cycle" it can be stated that:

Duty Cycle (DC) = (T-t)/T x 100

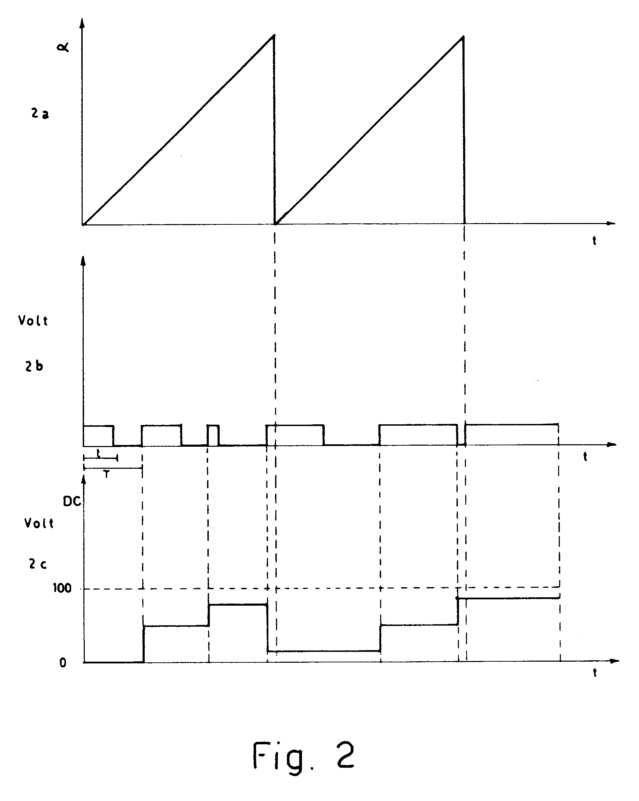

Where T is the period during which the pulse is transmitted and t is the duration of the pulse (Figure 2). The values T and t can be variable.

If the machine 2 is an internatal combustion engine of a motor vehicle the members 3 the duty cycle of which is controlled, can be constituted by the injector of a fuel injection system, a bypass valve in the slow running adjustment system (carburettor feed), a valve which regulates the supercharging air in turbo charged engines, a valve for regulating the angular position of the camshaft, etc. If the machine 2 is constituted by an automatic machine the members 3 the duty cycle of which is controlled can be constituted by the induction device movement regulator or a regulator controlling the electrification of a plastics product during a forming phase thereof, etc.

With reference to Figure 1, the system 1 comprises:

the said machine 2 within which the members 3 have been schematically indicated;

a device 5 (generally constituted by an electronic central control unit) operable to control the duty cycle of the members 3;

a block 4 which represents a cyclic motion angular position decoder to which electrical lines carrying synchronising signals lead from the output of the machine 2;

a block 6 which represents a digital-to-analogue convertor and which converts the duty cycle signals transmitted from the device 5 to the members 3 and the duty cycle signals processed by a respective transfer function in the device 5 into corresponding analogue signals;

a block 7 to which the signals from the output of the block 6 are directed, and which represents a unit for monitoring for possible errors existing between the processed signals and those transmitted by the device 5, and which is operable to generate an error signal;

a block 8 for processing the said error signal;

a block 9 connected to the block 6 and operable to record the analogue signals under consideration in a system of Cartesian axes on a video and/or on paper and/or on a magnetic support;

a block 11 connected to the block 7 and operable to display the error signal graphically or numerically on video and/or on paper and/or on magnetic support;

a block 12 connected to the block 8 and through which it is possible to act in the machine 2 for regulation of the members 3 for the purpose nullifying errors detected in the block 7; and

a block 13 connected to the block 8 by means of which the member 3 of the machine 2 which has an incorrect functioning is indicated.

If the device 5 is a central control unit there is an exchange of signals between this and the machine 2, of which those which originate in the machine 2 relate to operating conditions of the member 3 and other members or actuators of the machine 2, to quantities measured in this, and to the angular position of the shaft of the machine 2 which follows the cyclic motion. The signals transmitted from the device 5 to the machine 2 are those relating to the actuation of controls. Other signals, relating to operator controls and/or to quantities measured in external devices fitted to the machine 2 often arrive at the device 5. If the device 5 is a central control unit the block 8 can be integrated in the device 5.

By the term "synchronising signals" is meant signals by which it is possible to arrive at the angular position of the cyclic motion. for example, in a motor vehicle engine, the angular position of the cyclic motion is determined by the engine crankshaft position signal and by the signal representing the position of the cam shaft; which signals are detected, as is known, by detecting the speed of rotation and by a phase sensor.

For a better understanding of the operation of the system 1, the device 5 can be schematically sub-divided into three blocks the first block 14 of which is constituted by a connection interface and by a central data processing and memorisation unit, a second block 15 of which represents the unit in which the control actuation signal is determined by means of a transfer function, and a third block 16 of which represents the unit in which the control signal sent to the member 3 of the machine 2 is determined. In this way it is possible to specify in the device 5 input signals, control actuation signals, that is processed signals, and output signals represented by actuation control signals, that it signals effectively sent to the members 3.

With reference to Figure 2, the Cartesian axis diagram indicated 2a illustrates the cyclic motion, that is the output signal from the block 4. In the diagram 2a time t is plotted along the abscissa and the angle $\alpha$ is plotted along the ordinate. The Cartesian axis diagram indicated 2b represents a duty cycle signal which can be a processed signal or that transmitted from the device 5 which is detected by the block 6. In diagram 2b time t is plotted on the abscissa and a value between 0 and 1 volt is plotted along the ordinate. The Cartesian axis diagram indicated 2c represents the output signal from the block 6, that is after processing effected by the block 6 on the input signal. In diagram 2c time t is plotted on the abscissa and voltage in volts is plotted on the ordinate. For a better understanding of the diagram 2c the duty cycle value calculated with the above-indicated formula is also plotted along the ordinate. In effect, in block 6 the duty cycle of the pulse in a period T is calculated and this value converted into volts is plotted on the diagram 2c in the subsequent period T, and so on for each period T. An analogue signal is therefore obtained from the output of the block 6.

From what has been described the advantages achieved with the present invention will be apparent.

In particular, all the duty cycle signals processed and transmitted from the device 5 can be converted into analogue signals referred to the machine's cyclic motion. It will be evident that analogue signal diagrams on cartesian axis, and in correlation with the cyclic motion, are easy to understand and therefore can be analysed and studied with greater facility. It is thus possible to perform a series of comparisons between processed signals and signals sent to the members 3. All these comparisons are achieved taking the cycle of motion into account, so that the influence of the cycle of motion on the operation of the device 5 and on the functioning of the members 3 can be identified and monitored. Furthermore, with these comparisons it is possible to detect the intervention time of the device 5 and of the members 3 for the purpose of identifying possible time offsets or phase displacements.

By processing the data in the comparisons it is possible to identify any components of the machine which are operating incorrectly and which it is necessary to replace, and those for which an adjustment of the central control unit is possible for regulation of the actuator, and finally, it is possible to control the effectiveness of the management programme defined in the device 5. In this way it is possible to provide in block 6 a calculation unit which performs the transfer function utilised in the device 5 for determination of the command signals, and which controls the accuracy of calculation. All the data can be memorised and processed by an electronic processor to which it is possible from request not only comparisons between various signals such as those indicated above, but also possible interactions between signals relating to different actuators, and statistical analysis of detected errors. For these comparisons it is possible also to take into account signals which arrive from outside and relate to operator controls, the conditions of members fitted to the machine, ambient conditions, ground conditions for a motor vehicle etc. It is also in fact possible, by use of a synchronous counter, to plot on Cartesian axes, referred to the cycle of motion, even other types of pulse signals.

As will be evident the embodiment of the invention opens many routes for its use given that the system can be an instrument for technical assistance connected in parallel directly to the device 5, a research and development instrument connected to a processor, or an instrument connected to a data acquisition unit for durability and reliability tests on the members 3 of the machine 2 and on the components of the device 5.

Finally, it is clear that the system 1 described and illustrated here can have modifications and variations introduced thereto without by this departing from the protective ambit of the present invention.

## Claims

1. A system for detecting pulse signals in a machine (2) having a cyclic operation, characterised by the fact that it comprises:

    an electronic device (5) operable to control members (3) of the said machine (2) by duty cycle electrical signals;

    first means (4) for decoding the angular position of the cyclic motion by detecting synchronising signals in the said machine 2;

    second means (6) operable to convert the said duty cycle signals into analogue signals referred to a specific angular value of the cyclic motion; and

    third means (9) operable to record the said analogue signals in a system of Cartesian axes on a suitable support.

2. A system according to Claim 1, characterised by the fact that the said duty cycle signals converted into analogue signals relate to signals processed in the said device (5) and sent from this to the said members (3).

3. A system according to Claim 2, characterised in that it includes fourth means (6) operable to receive information relating to the transfer function utilised in the said device (5) for calculation of the said signals to send to the said members (3) and operable on the basis of the said signals transmitted from the said machine (2) to the said device (5) to provide the same calculation of the said signals to send to the said members; the said signals calculated by the said fourth means (6) also being converted into analogue signals by the said second means (6) and recorded by the said third means (9).

4. A system according to Claim 2, characterised in that it includes fifth means (7) operable to compare the said analogue signals relating to the said signals processed by the said device (5) with the said analogue signals relating to the said signals transmitted from the said device (5) to the said members (3), and operable to generate an error signal.

5. A system according to Claims 3 and 4, characterised in that the said fifth means (7) operate to compare the said analogue signals relating to the said signals processed by the said device (5) with the said analogue signals processed by the said fourth means (6) and operable to generate an error signal.

6. A system according to Claim 4 and/or 5, characterised in that it includes sixth means (11) operable to display the said error signal graphically or numerically on video and/or on paper and/or on a magnetic support.

7. A system according to at least one of Claims from 4 to 6, characterised in that it includes seventh means (8 and 13) operable to process the said error signal and to indicate the said member (3) of the said machine (2) to which the said error signal relates.

8. A system according to Claim 7, when dependant on Claim 5, characterised in that the said seventh means (8 and 13) are operable to indicate the block of the said device (5) in which the said error signal is determined.

9. A system according to Claim 7, characterised in that it includes eighth means (12) operable to adjust the said members (3) of the said machine (2) whereby to nullify the said error signal.

10. A system according to any preceding Claim, characterised by the fact that the said support for recording the said analogue signals is preferably constituted by a video and/or by a paper and/or magnetic support.

11. A system according to any preceding Claim, characterised in that it includes tenth means for memorisation of all the said analogue signals and the said error signals.

Fig.1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | PATENT ABSTRACTS OF JAPAN vol. 14, no. 452 (P-1112)27 September 1990 & JP-A-21 79 966 ( SONY CORP ) 12 July 1990 * abstract * | 1,10 | F02D41/22 F02D41/26 G01D1/00 |
| A | --- | 2-9,11 | |
| Y | PATENT ABSTRACTS OF JAPAN vol. 8, no. 20 (M-271)(1457) 27 January 1984 & JP-A-58 180 735 ( NIHON DENSHI KIKI KK ) 22 October 1983 * abstract * | 1,10 | |
| A | PATENT ABSTRACTS OF JAPAN vol. 10, no. 102 (P-448)18 April 1986 & JP-A-60 235 203 ( NIPPON DENKI KK ) 21 November 1985 * abstract * | 1-11 | |
|  | ----- | | TECHNICAL FIELDS SEARCHED (Int. Cl.5 ) G01D F02D |

The present search report has been drawn up for all claims

| Place of search | Date of completion of the search | Examiner |
|---|---|---|
| THE HAGUE | 06 OCTOBER 1992 | CHAPPLE I.D. |